(19) Europäisches Patentamt
European Patent Office
Office européen des brevets

(11) **EP 3 028 263 B1**

(12) **FASCICULE DE BREVET EUROPEEN**

(45) Date de publication et mention de la délivrance du brevet:
**18.12.2019 Bulletin 2019/51**

(21) Numéro de dépôt: **14748250.9**

(22) Date de dépôt: **21.07.2014**

(51) Int Cl.:
*G06T 19/20* *(2011.01)*    *G06T 17/20* *(2006.01)*

(86) Numéro de dépôt international:
**PCT/FR2014/051860**

(87) Numéro de publication internationale:
**WO 2015/015086 (05.02.2015 Gazette 2015/05)**

(54) **PROCÉDÉ D'ADAPTATION D'UNE REPRÉSENTATION GÉOLOGIQUE D'UN SOUS-SOL**

VERFAHREN ZUR ANPASSUNG EINER GEOLOGISCHEN DARSTELLUNG EINES UNTERGRUNDES

METHOD FOR ADAPTING A GEOLOGICAL REPRESENTATION OF A SUBSURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2013 FR 1357564**

(43) Date de publication de la demande:
**08.06.2016 Bulletin 2016/23**

(73) Titulaire: **Total SA**
**92400 Courbevoie (FR)**

(72) Inventeurs:
• **FORGE, Aurèle**
  **F-64000 Pau (FR)**
• **PIVOT, Frédérick**
  **F-64000 Pau (FR)**

(74) Mandataire: **Plasseraud IP**
**66, rue de la Chaussée d'Antin**
**75440 Paris Cedex 09 (FR)**

(56) Documents cités:
**EP-B1- 0 801 364     EP-B2- 0 254 325**
**WO-A2-03/050766**

• **Adam Faeth and Chris Harding: "Supporting Interactive Haptic Shaping of 3D Geologic Surfaces with Deformation Property Painting", , 2009, XP055119633, Extrait de l'Internet: URL:http://www.vrac.iastate.edu/~charding/ M4/papers/eg09_deformation_mapping_under_r ev.pdf [extrait le 2014-05-22]**

**Description**

La présente invention concerne le domaine de l'adaptation de représentations de sous-sols géologiques pour une mise en correspondance avec une représentation cible et pour une assistance à la détermination fiable de sous-sols géologiques.

Pour la détermination adéquate des réserves en gaz ou en hydrocarbures contenus dans un réservoir, il est utile d'établir des grilles (ou modèle maillé) de réservoirs, par exemple sur la base de l'interprétation sismique 3D du sous-sol. EP0254325 décrit un "procédé pour la modélisation mathématique tridimensionnelle d'espaces géologiques souterrains".

Les grilles de réservoir comprennent des couches de mailles. Ces couches tendent le plus souvent à être représentatives des couches de sédimentation présentes dans le sous-sol.

Ainsi, les couches de mailles du modèle cherchent à suivre les couches stratigraphiques déterminées par divers outils (outils sismiques, modélisation réalisée à partir de données de puits, etc.). De plus, un maillage peut être contraint par un certain nombre de conditions topologiques et/ou géométriques.

Il est possible que les différents outils à disposition des géologues ou des ingénieurs puits ne fournissent pas les mêmes résultats ou que les conditions topologiques et/ou géométriques (par exemple, relevés aux puits) ne correspondent pas exactement aux résultats fournis par ces différents outils. En outre, ces mêmes outils peuvent fournir des résultats présentant certaines incertitudes (ex. interprétation d'une image sismique bruité) : des solutions alternatives peuvent alors exister.

Dans l'hypothèse d'un changement de solution, il est souvent nécessaire de recalculer complètement un nouveau modèle maillé afin de s'adapter à ce changement.

Ce re-calcul peut être long, fastidieux et inefficace, surtout si les différences entre la solution initiale et la nouvelle solution sont faibles.

Il y a ainsi un besoin pour simplifier le calcul d'un nouveau modèle en cas de changement de solution vers une solution alternative.

La présente invention vient améliorer la situation.

A cet effet, la présente invention propose une déformation de la grille du modèle initial afin de permettre d'adapter le modèle initial à la nouvelle solution alternative sans recalculer l'ensemble du modèle.

La présente invention vise alors un procédé selon la revendication 1 de déformation d'un modèle maillé, ledit modèle comprenant une pluralité d'interfaces de référence comprenant un ordre, chaque interface de référence étant associée à une interface cible dans ledit modèle.

Le procédé comporte :

- pour au moins un couple d'interfaces successives dans l'ordre de la pluralité d'interfaces formé par une première interface de référence et une deuxième interface de référence, le modèle comprenant entre ladite première interface et ladite deuxième interface une pluralité d'alignement de coins de mailles, ces alignements formant des arêtes de mailles, chaque coin ayant des coordonnées initiales dans le modèle et pour chaque alignement courant parmi ladite pluralité de coins de mailles :

  - détermination d'une première intersection entre l'alignement courant et ladite première interface de référence ;
  - détermination d'une deuxième intersection entre l'alignement courant et ladite deuxième interface de référence ;
  - détermination d'une troisième intersection entre l'alignement courant et l'interface cible associée à ladite première interface de référence ;
  - détermination d'une quatrième intersection entre l'alignement courant et l'interface cible associée à ladite deuxième interface de référence ;
  - modification des coordonnées pour chaque coin courant de l'alignement en fonction des coordonnées initiales dudit coin courant, de la première intersection, de la deuxième intersection, de la troisième intersection et de la quatrième intersection, les coordonnées modifiés dudit coin courant étant sur l'alignement courant.

Les interfaces de référence sont des surfaces (cas d'un maillage 3D) ou des lignes (cas d'un maillage 2D) séparant virtuellement deux couches de mailles. Le plus souvent ces interfaces sont sensiblement horizontales lorsque les couches sédimentaires n'ont pas été modifiées. Ainsi, il est possible de dire que les interfaces sont définies par les faces (cas d'un maillage 3D) ou les arêtes (cas d'un maillage 2D) supérieures et inférieures des mailles de la couche : une interface de référence supérieure et une interface de référence inférieure sont ainsi définies pour chacune des couches de mailles.

Il est possible de classer les différentes interfaces cibles ou de référence en fonction de leur position dans le modèle (les interfaces ne se croisant pas). Par exemple, l'interface supérieure d'une couche de mailles peut posséder un index d'ordre inférieur à l'interface inférieure de cette même couche : les interfaces de références étant un sous-ensemble des interfaces du modèle, l'ordre est également respecté.

Bien entendu, entre deux interfaces de référence, une pluralité de couches de mailles peut exister entre deux interfaces de référence successives.

Dans une direction sensiblement perpendiculaire aux interfaces de référence, des arêtes des mailles définissent un alignement de coins de mailles.

Le plus souvent, l'intersection entre un alignement courant et une interface de référence est un coin supérieur d'une maille dont la face supérieure (cas d'un maillage 3D) ou l'arête supérieure (cas d'un maillage 2D) fait partie de cette interface de référence.

La modification des coordonnées des coins maintient ces coins sur l'alignement. Même s'il peut sembler pertinent de déplacer simplement ces coins selon un axe vertical indépendant des caractéristiques locales des mailles, ce déplacement simple n'est pas toujours approprié. En effet, la qualité du maillage peut en être dégradée et les piliers du maillage peuvent être « cassés » (i.e. l'alignement des arêtes ou des coins peut être rompu). Cette caractéristique permet de maintenir les conditions idéales du modèle pour des simulations ultérieures.

Le procédé peut en outre comporter la réception dudit modèle maillé.

Le procédé peut en outre comporter la fourniture du modèle maillé modifié comportant les coins modifiés.

De plus, un système courant de coordonnée peut être défini le long de l'alignement courant, la première intersection ayant une coordonnée $c_1$ dans le système courant de coordonnée, la deuxième intersection ayant une coordonnée $c_2$ dans le système courant de coordonnée, la troisième intersection ayant une coordonnée $c_3$ dans le système courant de coordonnée, la quatrième intersection ayant une coordonnée $c_4$ dans le système courant de coordonnée, ledit coin courant ayant une coordonnée initiale $c_c$ dans le système courant de coordonnée.

La coordonnée modifiée dudit coin courant dans le système courant de coordonnée peut alors être fonction de :

$$c_n = c_C + \left(c_2 - c_4\right) + \left(c_1 - c_3 - c_2 + c_4\right)\frac{c_c - c_2}{c_1 - c_2}$$

Ainsi, la modification d'un point courant de l'alignement peut être prendre en compte de manière linéaire le déplacement des différentes interfaces (de référence en cible).

Le procédé comporte en outre pour le au moins un couple d'interfaces successives, les coins desdits alignements compris entre ladite première interface et ladite deuxième interface ayant un numéro d'ordre dans chaque alignement :

- pour chaque numéro d'ordre courant, identification d'une interface intermédiaire formée de côtés de mailles, lesdits côtés ayant comme coins des coins dudit numéro d'ordre courant;
- pour chaque interface intermédiaire et pour chaque coin courant de ladite interface courante, seconde modification des coordonnées dudit coin courant en fonction des coordonnées courantes dudit coin courant et en fonction des coordonnées courantes des coins distants de moins d'une valeur de fenêtre du coin courant.

On appelle les interfaces intermédiaires les interfaces, telles que décrit précédemment, qui sont comprises strictement entre les interfaces de références.

Il est possible de classer les différentes interfaces intermédiaires en fonction de leur position dans le modèle (les interfaces ne se croisant pas). Par exemple, l'interface intermédiaire supérieure d'une couche de mailles peut posséder un index d'ordre inférieur à l'interface intermédiaire inférieure de cette même couche.

La seconde modification des coordonnées des mailles peut permettre d'éviter l'apparition de singularités.

La distance entre le coin courant et les autres coins peut être toute distance au sens mathématique.

De plus, les coordonnées des coins étant exprimé selon une pluralité de composantes, la seconde modification des coordonnées dudit coin peut comprendre le calcul d'un filtre médian ou d'une moyenne sur les coordonnées dudit coin courant selon au moins une composante et sur les coordonnées desdits coins distants selon la au moins une composante.

La au moins une composante peut être, par exemple, la coordonnée selon l'axe $\vec{z}$.

En outre, ledit coin courant étant compris dans un alignement, la seconde modification des coordonnées dudit coin courant peut maintenir ledit coin dans ledit alignement.

Ainsi, si le calcul d'un filtre médian ou d'une moyenne n'est effectué que sur la valeur d'une composante (ex. coordonnées selon l'axe $\vec{z}$), il est possible que la modification impacte les autres coordonnées en déplaçant ledit coin selon le pilier (ou alignement) jusqu'à ce que le déplacement selon la composante (ex. selon l'axe $\vec{z}$) corresponde au calcul effectué.

La valeur de fenêtre peut également être fonction d'une distance dudit coin courant à une faille dans ledit modèle.

Ainsi, il est possible de limiter l'impact de la seconde modification lorsque le point considéré est situé à une grande distance des failles, c'est-à-dire loin des causes probable d'apparition de singularité.

De plus, la valeur de fenêtre peut être fonction d'une direction anisotropique dans ledit modèle.

Dans un mode de réalisation, la direction anisotropique peut être parallèle à une ligne passant par ledit coin courant et perpendiculaire à une faille dans ledit modèle.

Ainsi, il est possible de limiter le nombre de points présentant des singularités (et se situant, de manière statistique, le long des failles) dans le calcul de la seconde modification.

En outre, les coordonnées des coins étant exprimé selon une pluralité de composantes, la distance selon au moins une composante de coordonnées entre un coin courant et un coin courant modifié peut être inférieure à une valeur de seuil.

Ainsi, il est possible de limiter la seconde modification des coins selon une composante de coordonnées (ex. selon l'axe vertical $\vec{z}$). Au-delà de la valeur de seuil, la modification peut, par exemple, être limitée à cette valeur de seuil selon cette composante (ex. à l'aide de l'opérateur min).

La méthode peut comporter en outre, le modèle comportant au moins une faille :

- identification d'au moins un coin ayant une distance à la au moins une faille inférieure à une distance d'influence prédéterminée ;
- modification des coordonnées du coin ayant une distance à la au moins une faille inférieure à la distance d'influence prédéterminée en fonction de modifications déterminées pour une pluralité de points ayant une distance à la au moins une faille supérieure à la distance d'influence prédéterminée et appartenant à une interface commune avec le coin ayant une distance à la au moins une faille inférieure à la distance d'influence prédéterminée.

Dans un mode de réalisation, la modification des coordonnées du coin ayant une distance à la au moins une faille inférieure à la distance d'influence prédéterminée peut comporter un calcul d'une moyenne pondérée.

La moyenne pondérée peut prendre en compte les modifications calculées pour les points hors de la zone d'influence de la faille, i.e. au-delà de la distance d'influence prédéterminée. Le facteur de pondération peut être fonction de la distance du point considéré à la faille par exemple.

De plus, la modification des coordonnées du coin ayant une distance à la au moins une faille inférieure à la distance d'influence prédéterminée peut comporter une régression.

La régression (ex. linéaire ou polynomiale) peut prendre en compte les modifications calculées pour les points hors de la zone d'influence de la faille, i.e. au-delà de la distance d'influence prédéterminée.

Un dispositif destiné à déformer un maillage peut être avantageux, en lui-même, dès lors qu'il permet de simplifier le travail des géologues ou des ingénieurs-puits.

Ainsi, la présente invention vise également un dispositif selon la revendication 12 de déformation d'un modèle maillé comprenant une pluralité d'interfaces de référence, la pluralité d'interfaces de référence comprenant un ordre et chaque interface de référence étant associée à une interface cible dans ledit modèle.

Le dispositif comporte :

- une interface d'entrée pour la réception du modèle maillé ;
- un circuit adapté pour réaliser les actions suivantes pour au moins un couple d'interfaces successives dans l'ordre de la pluralité d'interfaces formé par une première interface de référence et une deuxième interface de référence, le modèle comprenant entre ladite première interface et ladite deuxième interface une pluralité d'alignement de coins de mailles, ces alignements formant des arêtes de mailles, chaque coin ayant des coordonnées initiales dans le modèle et pour chaque alignement courant parmi ladite pluralité de coins de mailles :

  - détermination d'une première intersection entre l'alignement courant et ladite première interface de référence ;
  - détermination d'une deuxième intersection entre l'alignement courant et ladite deuxième interface de référence ;
  - détermination d'une troisième intersection entre l'alignement courant et l'interface cible associée à ladite première interface de référence ;
  - détermination d'une quatrième intersection entre l'alignement courant et l'interface cible associée à ladite deuxième interface de référence ;
  - modification des coordonnées pour chaque coin courant de l'alignement en fonction des coordonnées initiales dudit coin courant, de la première intersection, de la deuxième intersection, de la troisième intersection et de la quatrième intersection, les coordonnées modifiés dudit coin courant étant sur l'alignement courant ;

- une interface de sortie pour la fourniture du modèle maillé modifié.

La présente invention vise également un programme informatique comportant des instructions pour la mise en œuvre du procédé précédemment décrit, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

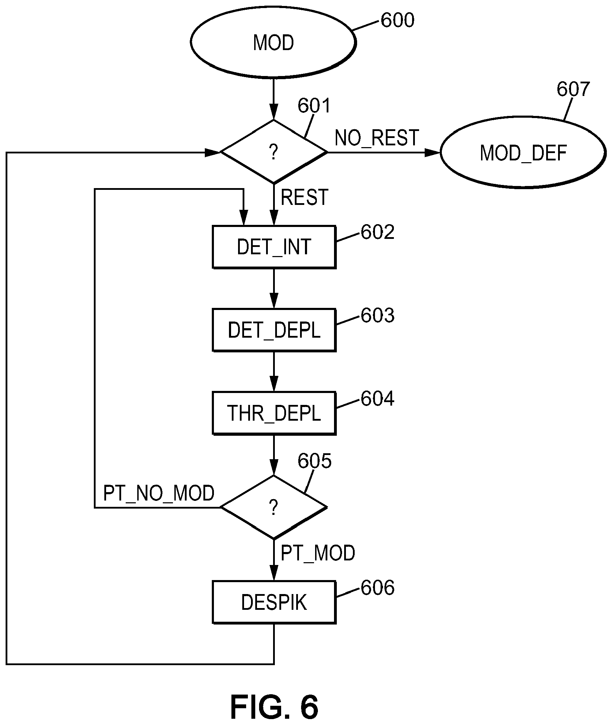

La figure 6 décrite en détail ci-après, peut former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :

- la figure 1 illustre une réalisation particulière de maillage d'un modèle en trois dimensions ;

- la figure 2a illustre un exemple d'interfaces de référence et d'interfaces cibles dans une réalisation particulière de l'invention ;

- la figure 2b illustre un exemple de calcul d'une modification de coordonnées d'un point compris entre deux interfaces de référence successives dans une réalisation particulière de l'invention ;

- la figure 3 illustre un exemple de calcul de coordonnées d'un point situé sur une face d'une maille ;

- la figure 4 illustre un exemple de modification de coordonnées d'un coin d'une maille en fonction des coordonnées des mailles proches ;

- la figure 5a illustre un exemple de maillage d'une faille dans un modèle avant déformation de ce maillage ;

- la figure 5b illustre un exemple de maillage d'une faille dans un modèle après déformation de ce maillage ;

- la figure 6 illustre un ordinogramme possible d'un mode de réalisation de l'invention ;

- la figure 7 illustre un dispositif informatique possible de déformation d'un maillage mettant en œuvre un mode de réalisation de l'invention.

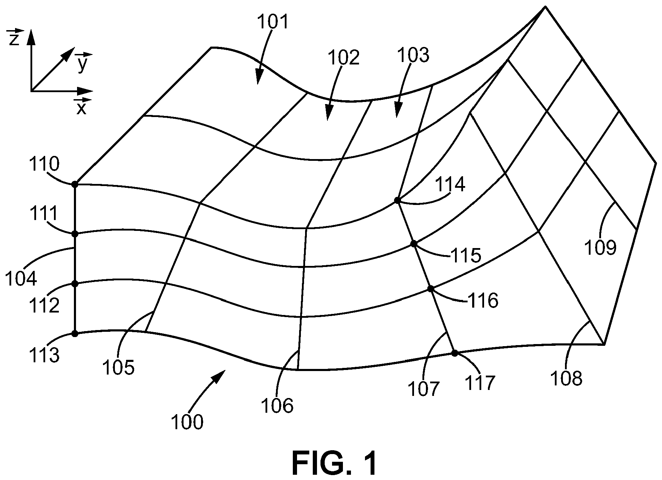

La figure 1 illustre une réalisation particulière de maillage d'un modèle en trois dimensions.

Ce modèle 100 est constitué d'une pluralité de mailles (101, 102, 103, etc.). De plus, ces mailles comportent des coins (110, 111, 112, 113, 114, 115, 116, 117, etc.). Le plus souvent ces coins sont partagés entre plusieurs mailles (ex. 4 mailles).

Ce type de maillage ne présente pas de mailles régulières mais celle-ci peuvent s'adapter aux formes et contraintes géométriques du sous-sol représenté.

Ainsi, dans un modèle maillé stratigraphique, les mailles sont regroupées en couches représentatives des couches de sédimentation présentes dans le sous-sol modélisé.

De plus, les arêtes perpendiculaires à ces couches (i.e. les arêtes sensiblement dans la direction $\vec{z}$ dans l'exemple de la figure 1) sont alignées pour un ensemble de couches du modèle (cet ensemble de couches est en effet défini par l'ensemble des couches successives pour lesquelles un alignement de coins est possible).

On appelle ces alignements d'arêtes (ou de coins) des « piliers ». A titre d'illustration, les segments 104 à 109 constituent des piliers :

- Le pilier 104 comprend un alignement des coins 110 à 113 ;

- Le pilier 107 comprend un alignement des coins 114 à 117.

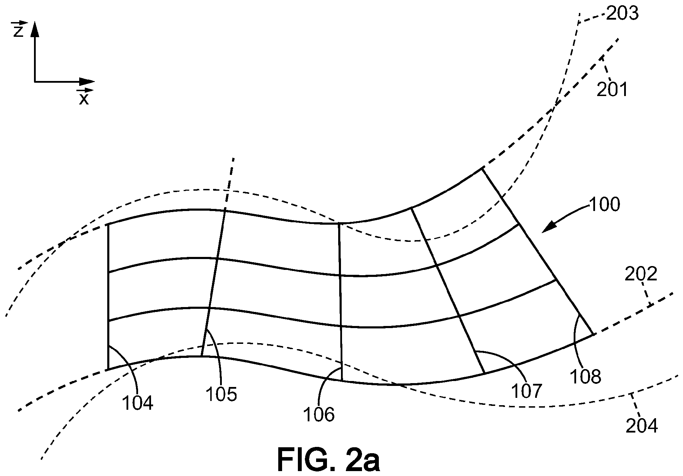

La figure 2a illustre un exemple d'interfaces de référence et d'interfaces cibles dans une réalisation particulière de l'invention.

Pour des raisons de simplification, la figure 2a est présentée en deux dimensions mais la description ci-dessous est également applicable à un maillage en trois dimensions.

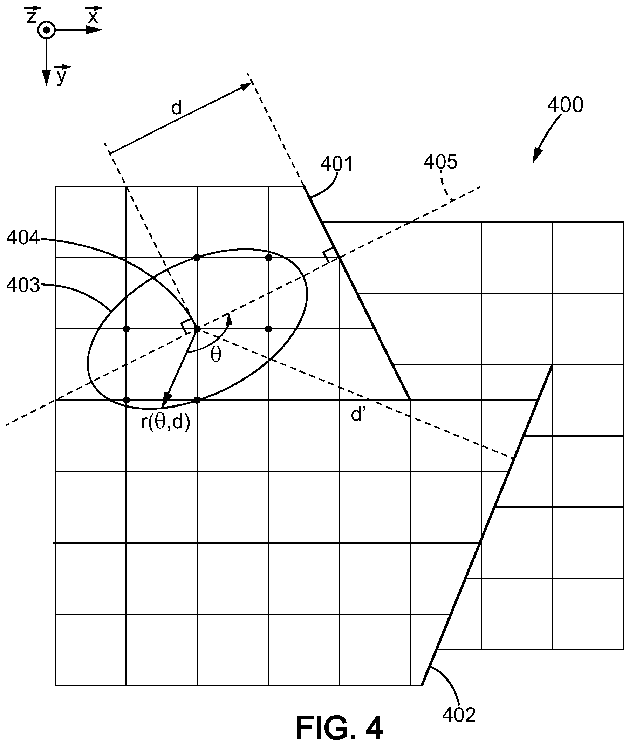

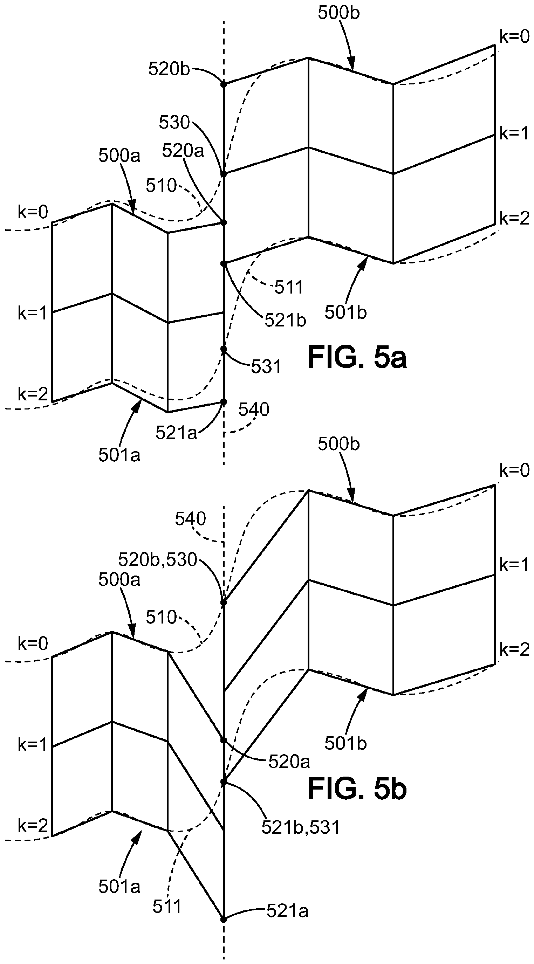

Le maillage 100 comprend trois couches de mailles empilées les unes sur les autres. Chaque couche permet de définir au moins une interface, i.e. ensemble des faces (maillage 3D) ou des arêtes (maillages 2D) supérieures ou inférieures des mailles de cette couche. Une couche peut présenter une discontinuité en cas, notamment, de présence de failles (voir figures 4, 5a et 5b).

Par exemple, il est possible de définir une interface 201 comprenant les faces (maillage 3D) ou des arêtes (maillages 2D) supérieures des mailles de la couche supérieure du modèle ou d'un ensemble de couches. De plus, il est possible de définir une interface 202 comprenant les faces (maillage 3D) ou des arêtes (maillages 2D) inférieures des mailles de la couche inférieure du modèle ou d'un ensemble de couches.

Les interfaces 201 et 202 sont également appelées interfaces de référence.

Pour les raisons décrites ci-dessus, les géologues ou les ingénieurs-puits peuvent estimer que ces interfaces de référence ne sont pas correctement positionnées dans l'espace. Ils peuvent en outre évaluer que la position correcte de ces interfaces (respectivement 201 et 202) dans l'espace devrait se situer au niveau des interfaces cibles (respectivement 203 et 204) et représentées sur la Figure 2a.

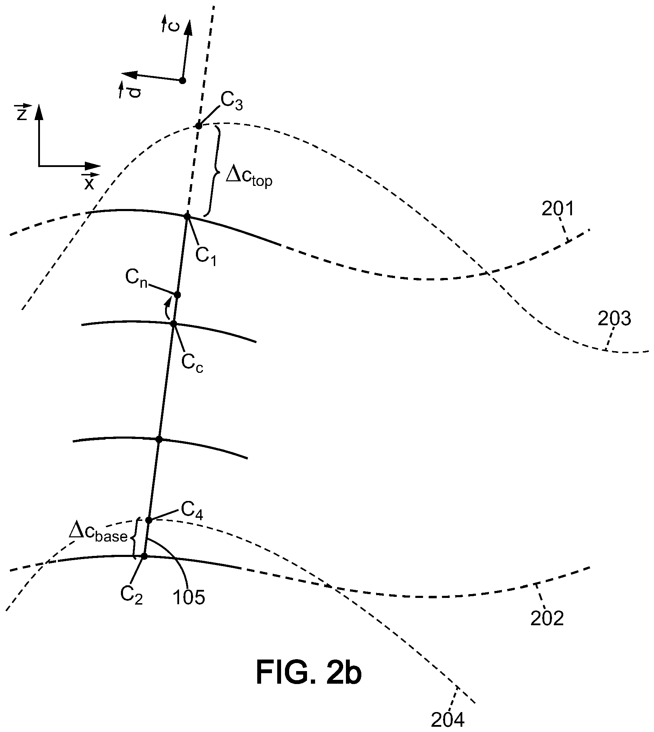

La figure 2b représente un détail de la figure 2a et illustre un exemple de calcul d'une modification de coordonnées d'un point compris entre deux interfaces de référence successives dans une réalisation particulière de l'invention.

L'intersection du pilier 105 avec l'interface 201 (respectivement 202) est le point $C_1$ (respectivement $C_2$). Dans l'hypothèse où le pilier est situé sur une faille du modèle (voir pilier 540, figure 5a et figure 5b), l'intersection de celui-ci avec une interface de référence peut mettre en évidence plusieurs points : pour la mise en œuvre du procédé, il peut suffire de choisir l'une des points d'intersections mises en évidence.

Pour modifier les coordonnées d'un point du maillage, il est par ailleurs utile de déterminer les intersections du pilier 105 avec les interfaces cibles 203 (i.e. le point $C_3$) et 204 (i.e. le point $C_4$). Pour calculer de telles intersections, il est possible de réaliser une interpolation linéaire pour déterminer l'équation de la droite passant par les différents points/coins de l'alignement 105.

De plus, de nombreux algorithmes existent pour permettre la détermination d'une intersection entre une droite et une courbe. Par exemple, pour déterminer l'intersection de la droite 105 avec la courbe 203, il est possible de mettre en œuvre un algorithme comportant un procédé dit de « *dual shooting* » et de dichotomie :

a/ A partir d'un premier point de la droite 105 (par exemple le point $C_1$), déterminer deux points secondaires situés à une première distance donnée du premier point (par exemple, la distance selon $\vec{z}$ entre le point $C_1$ et la courbe 203) et situés sur la droite 105 de chaque coté du point $C_1$, deux segments étant créés entre le premier point et chacun des deux points secondaires ;

$b_1$/ Si un des deux segments contient une intersection avec la courbe 203 (déterminé en comparant le signe de la différence entre la coordonnée selon $\vec{z}$ d'une extrémité du segment et de la coordonnée selon $\vec{z}$ de la projection selon $\vec{z}$ de cette dernière extrémité sur la courbe 203 et le signe de la différence entre la coordonnée selon $\vec{z}$ de l'autre extrémité du segment et de la coordonnée selon $\vec{z}$ de la projection selon $\vec{z}$ de cette autre extrémité sur la courbe 203, si le signe est différent, cela signifie qu'une intersection a lieu entre la droite et la courbe), puis affiner la position de l'intersection par une dichotomie des extrémités du segment contenant l'intersection.

$b_2$/ Si aucun des deux segments ne contient une intersection avec la courbe 203, alors déterminer, pour chacun des anciens points secondaires, un nouveau point secondaire située à la seconde distance (par exemple égal à la première distance) de l'ancien point secondaire et n'étant ni le premier point, ni un point secondaire précédemment calculé et recommencer l'étape $b_1$ et $b_2$ avec les deux segments formés par chacun des anciens points secondaires avec les nouveaux points secondaires déterminés.

Ainsi, les coordonnées des points $C_3$ et $C_4$ peuvent être déterminées.

A des fins de simplifications, il est possible de transformer le repère $(\vec{z}, \vec{z})$ par rotation en un nouveau repère $(\vec{z}, \vec{d})$ avec la droite 105 alignée sur le vecteur $\vec{c}$ de ce dernier repère.

Ainsi, le point $C_3$ correspond à une translation du point $C_1$ de $\Delta c_{top}$ selon l'axe $\vec{c}$. De plus, le point $C_4$ correspond à une translation du point $C_2$ de $\Delta c_{base}$ selon l'axe $\vec{c}$. Pour chacun des points de l'alignement 105 compris entre le point $C_1$ et $C_2$, il est possible de déterminer une translation de ces points à l'aide d'un modèle « élastique ». Ce modèle « élastique » modélise un effet de déformation et d'entrainement des points des mailles compris entre les interfaces 201 et 202 en fonction du déplacement de ces interfaces (expansion ou contraction).

Par exemple, il est possible de déterminer une translation d'un point $C_c$ de l'alignement selon la formule suivante :

$$c_n = c_C + \left(c_2 - c_4\right) + \left(c_1 - c_3 - c_2 + c_4\right)\frac{c_c - c_2}{c_1 - c_2}$$

ou encore

$$c_n - c_C = \Delta c_{base} + \left(\Delta c_{top} - \Delta c_{base}\right)\frac{c_c - c_2}{c_1 - c_2}$$

avec $c_c$ la coordonnées selon l'axe $\vec{c}$ du point $C_c$, $c_n$ la coordonnées selon l'axe $\vec{c}$ du point $C_n$, $c_1$ la coordonnées selon l'axe $\vec{c}$ du point $C_1$, $c_2$ la coordonnées selon l'axe $\vec{c}$ du point $C_2$, $c_3$ la coordonnées selon l'axe $\vec{c}$ du point $C_3$, $c_4$ la coordonnées selon l'axe $\vec{c}$ du point $C_4$.

Si, dans la formule ci-dessus, la translation du point $C_c$ est linéaire au regard des déplacements des points $C_1$ et $C_2$, il est également possible de rendre cette translation non linéaire.

Par ailleurs, il est possible de limiter la translation du point $C_c$ en limitant la valeur de translation à une valeur

maximal $c_{max}$. Ainsi, $|c_n - c_c|$ peut être égale à $\min\left(\left|(c_2 - c_4) + (c_1 - c_3 - c_2 + c_4)\frac{c_c - c_2}{c_1 - c_2}\right|, |c_{max}|\right)$ avec min l'opérateur minimum. Si ce seuillage est effectué sur la translation selon l'axe $\vec{c}$, il peut être également être effectué sur l'axe $\vec{z}$ avec un déplacement maximal selon cet axe d'une valeur $z_{max}$. Dès lors la valeur de la translation $|c_n - c_c|$ du

point $C_c$ peut être égale à $\min\left(\left|(c_2 - c_4) + (c_1 - c_3 - c_2 + c_4)\frac{c_c - c_2}{c_1 - c_2}\right|, \left|\frac{z_{max}}{\cos(\alpha)}\right|\right)$ avec $\frac{\pi}{2} + \alpha$ l'angle de rotation entre le repère $(\vec{x},\vec{z})$ et le repère $(\vec{c},\vec{d})$.

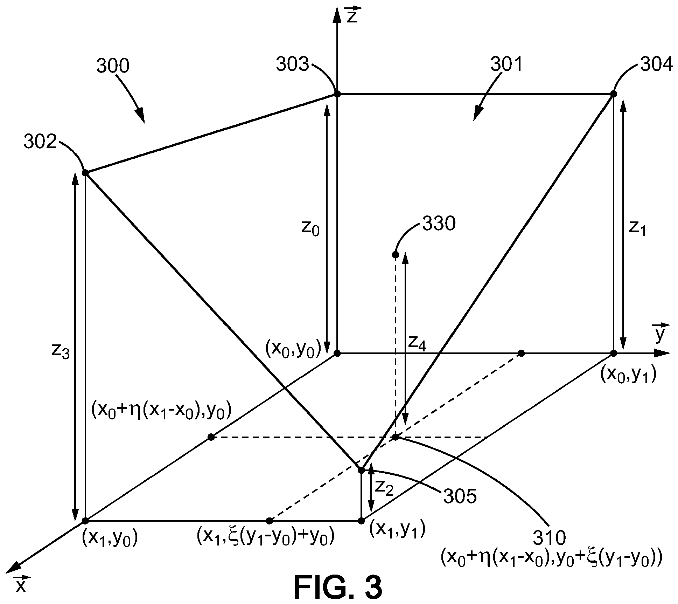

La figure 3 illustre un exemple de calcul de coordonnées d'un point situé sur une face d'une maille.

Lors de la modification des coordonnées des coins d'une maille telle que décrite précédemment, il est possible de connaître la coordonnée z des points d'une interface donnée en tout point (x,y) même si seuls les points des piliers sont modifiées à l'aide de l'algorithme précédent. En effet, supposons que l'interface donnée comprenne la face définie par :

- le coin 302 (de coordonnées $(x_1, y_0, z_3)$) ;

- le coin 303 (de coordonnées $(x_0, y_0, z_0)$) ;

- le coin 304 (de coordonnées $(x_0, y_1, z_1)$) ;

- le coin 302 (de coordonnées $(x_1, y_1, z_2)$).

Une première approche consiste à considérer que la coordonnée $z_4$ du point 330 (situé au dessus, selon l'axe $\vec{z}$, du point 310 de coordonnées $(x_0 + \eta(x_1 - x_0), y_0 + \xi(y_1 - y_0),0)$ et situé sur la face d'intérêt) peut être approximée par la coordonnée selon $\vec{z}$ du coin le plus proche parmi les coins 302 à 305. Le coin le plus proche est déterminé dans le plan $(\vec{x},\vec{y})$, i.e. :

- le coin le plus proche est le coin 303 si $\eta < 0.5$ et si $\xi < 0.5$,

- le coin le plus proche est le coin 304 si $\eta < 0.5$ et si $\xi > 0.5$,

- le coin le plus proche est le coin 305 si $\eta > 0.5$ et si $\xi > 0.5$, et

- le coin le plus proche est le coin 302 si $\eta > 0.5$ et si $\xi < 0.5$.

Il est également possible de réaliser une approximation de Lagrange pour évaluer la coordonnée $z_4$ du point 330. Cette coordonnée $z_4$ peut être approximée par la valeur $z_0(\xi-1)+z_1(\xi-\xi\eta)+z_2(\eta-\xi\eta)+z_3\xi\eta$.

La figure 4 illustre un exemple de modification de coordonnées d'un coin d'une maille en fonction des coordonnées des mailles proches.

La figure 4 représente une pluralité de mailles d'une même couche projetées dans un plan (plan de la figure). Afin d'éviter certains effets de bords (ou singularités) générés par la présence de failles dans le modèle 400, il est possible de « lisser » les valeurs des coordonnées des mailles selon une direction de l'espace (par exemple, la direction de l'axe $\vec{z}$, axe représentant la verticale dans le modèle de sous-sol 400).

Ainsi, pour chaque coin 404 de maille, il est possible de réaliser une moyenne ou de calculer un filtre médian en fonction de la coordonnée du coin considéré 404 selon l'axe $\vec{z}$ et des coordonnées des coins voisins (i.e. les coins dont la distance au coin considéré 404 est inférieure à une certaine distance) selon ce même axe. La détermination des coins voisins peut comprendre le calcul d'une distance r entre deux points : cette distance peut être une distance euclidienne, une distance de Manhattan, une distance de Minkowski, une distance de Tchebychev ou toute autre distance au sens mathématique.

Par ailleurs, la distance r peut être une fonction de la distance du point considéré 404 à une faille (i.e. d pour la distance à la faille 401, la distance étant alors une fonction r(d)). En effet, il peut être utile de diminuer le nombre de coins considérés comme voisins lorsque la distance aux failles est grande : la probabilité d'occurrence d'une singularité diminuant statistiquement.

Cette distance r peut être également fonction d'un angle θ représentatif d'un angle avec la direction à la faille (la distance étant alors une fonction r(θ)). Cette direction est aussi appelé direction anisotropique. Ainsi, il est possible de limiter le nombre de coins considérés comme voisins dans une direction parallèle à la faille et de l'augmenter dans une direction perpendiculaire à la faille : la probabilité d'occurrence d'une singularité étant statistiquement plus grande le long des failles.

A titre d'illustration, les points voisins du point 404 ont été mis en évidence au centre de l'ellipse 403 de la figure 4 (la distance étant r(θ,d)).

En cas d'une pluralité de failles, il est possible, pour le calcul de la nouvelle coordonnée du point 404 selon l'axe $\vec{z}$ :

- soit de ne considérer pour le calcul que la faille la plus proche (i.e. la faille 401 étant plus proche du coin 404 que la faille 402, d'>d),

- soit de considérer l'ensemble des failles du modèle (401 et 402) et de faire l'union des coins identifiés comme étant voisins pour chacune des failles.

La figure 5a illustre un exemple de maillage d'une faille dans un modèle avant déformation de ce maillage.

La figure 5b illustre un exemple de maillage d'une faille dans un modèle après déformation de ce maillage.

Dans cet exemple de maillage, l'interface de référence supérieure possède un index k=0. Ainsi cette interface de référence supérieure notée 500a-500b comporte les surfaces 500a et 500b. De plus, l'interface de référence inférieure possède un index k=2. Ainsi, cette interface de référence inférieure notée 501a-501b comporte les surfaces 501a et 501b.

La surface 510 est l'interface cible supérieure, interface cible associée à l'interface de référence 500a-500b. La surface 511 est l'interface cible inférieure, interface cible associée à l'interface de référence 501a-501b.

En cas de déformation, le maillage déformé de la figure 5b peut présenter une singularité au niveau d'une faille. La présence de cette singularité peut être liée au fait que les interfaces de référence sont discontinues.

En effet, la présence d'une discontinuité dans les interfaces de références induit le fait que le pilier 540 possède plusieurs intersections avec l'interface de référence 500a-500b (i.e. les points 520a et 520b appartenant respectivement à la surface 500a et 500b). De même, le pilier 540 possède plusieurs intersections avec l'interface de référence 501a-501b (i.e. les points 521a et 521b appartenant respectivement à la surface 501a et 501b). Lors de la mise en œuvre du procédé décrit précédemment, une seule intersection par interface de référence est utilisée pour le calcul des modifications des coins de l'alignement.

Dans l'exemple de la figure 5b, le coin 520b a été choisi pour être déplacé au niveau du point 530 (i.e. intersection du piler 540 et de l'interface cible 510). Le coin 520a ne peut ainsi pas correspondre au point 530 et est déplacé notablement vers le bas. De plus, dans l'exemple de la figure 5b, le coin 521b a été choisi pour être déplacé au niveau du point 531 (i.e. intersection du piler 540 et de l'interface cible 511). Le coin 521a ne peut ainsi pas correspondre au point 531 et est déplacé notablement vers le bas.

Une singularité est ainsi crée au niveau de la faille.

Afin de prendre en compte cette discontinuité et de limiter l'apparition de tels singularités, il est possible d'appliquer l'algorithme proposé en figure 4 (i.e. calcul de moyenne ou seuillage).

D'autres algorithmes permettant de limiter l'apparition de singularités peuvent exister.

Par exemple, la modification des coordonnées des coins des alignements situées à une distance prédéterminée d'une faille (ou « zone d'influence ») peut ainsi être régie par des règles spécifiques et autres que celles précédemment décrites. La distance prédéterminée peut être toute distance au sens mathématique : elle peut être exprimée en nombre d'alignements, ou toute autre mesure adaptée au modèle.

Il est ainsi possible de déterminer la modification de coordonnées des points dans la zone d'influence sur la base des modifications calculés pour des points situés en dehors de cette zone et du même coté de la faille (i.e. sur le même panneau de faille). Les points servant de base à cette détermination peuvent être ceux situés sur une même interface que le point dans la modification est à déterminer.

La modification des coordonnées d'un point dans la zone d'influence peut être déterminé en réalisant une moyenne pondérée des modifications calculées pour les points servant de base à cette détermination, par exemple en utilisant une pondération inversement proportionnelle à la distance. Bien entendu, il est possible de ne pas prendre en compte les points situés hors de la zone d'influence et situés au delà d'une distance prédéterminée de cette zone d'influence ou de la faille.

En outre, il est possible de déterminer la modification des coordonnées d'un point dans la zone d'influence en réalisant une extrapolation linéaire ou polynomiale en fonction des modifications déterminées à partir des points proches de la zone d'influence mais situés en dehors. Cette extrapolation cherche à mettre en évidence une tendance de modification dans une zone proche de la faille mais sans être dans la zone d'influence de la faille.

La figure 6 illustre un ordinogramme possible d'un mode de réalisation de l'invention.

Sur réception d'un modèle maillé comprenant une pluralité d'interfaces de référence et des interfaces cibles associées, il est possible de déterminer un ordre dans ces interfaces, par exemple, en fonction de leur position selon l'axe $\vec{z}$ du modèle.

Il est alors possible de grouper ces interfaces, chaque groupe d'interface comprenant deux interfaces de références successives dans l'ordre de la pluralité d'interfaces.

Si un des groupes d'interfaces de référence n'a pas été traité (test 601, sortie REST), alors ce groupe d'interfaces est sélectionné.

Pour chacun des piliers compris entre les deux interfaces du groupe sélectionné, il est possible de déterminer les intersections entre ce pilier et les deux interfaces de référence (étape 602). De plus, il est également possible de déterminer les intersections entre ce pilier et les interfaces cibles associées à ces deux interfaces de référence (étape 602). Des exemples de modes de détermination de ces intersections sont présentés ci-avant.

En fonction des coordonnées de ces intersections, il est alors possible de déterminer des translations des points/coins du pilier le long de ce pilier (étape 603). Des exemples de modes de détermination de ces translations sont présentés en relation avec la figure 2.

Il est possible de limiter la norme de la translation des points de ce pilier comme présenté ci-avant (étape 604).

Si des piliers compris entre les deux interfaces du groupe sélectionné n'ont pas été traités (test 605, sortie PT_NO_MOD), il est alors possible de réaliser le procédé décrit sur ces piliers.

Dans le cas contraire (test 605, sortie PT_MOD), un lissage sur chaque couche du modèle et tel que décrit en relation avec la figure 4 peut être réalisé (étape 606).

Si tous les groupes d'interfaces de référence ont été traités (test 601, sortie NO_REST), alors le modèle modifié 607 peut être retourné à l'opérateur et/ou fourni en entrée d'un nouveau module de calcul pour des traitements additionnels.

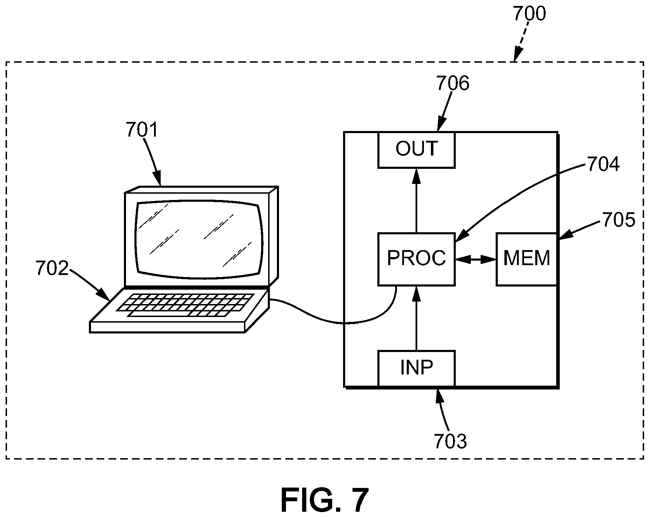

La figure 7 représente un exemple de dispositif de déformation de mailles d'un modèle dans un mode de réalisation de l'invention.

Dans ce mode de réalisation, le dispositif comporte un ordinateur 700, comprenant une mémoire 705 pour stocker des instructions permettant la mise en œuvre du procédé, les données de mesures reçues, et des données temporaires pour réaliser les différentes étapes du procédé tel que décrit précédemment.

L'ordinateur comporte en outre un circuit 704. Ce circuit peut être, par exemple :

- un processeur apte à interpréter des instructions sous la forme de programme informatique, ou

- une carte électronique dont les étapes du procédé de l'invention sont décrites dans le silicium, ou encore

- une puce électronique programmable comme une puce FPGA (pour « Field-Programmable Gate Array » en anglais).

Cet ordinateur comporte une interface d'entrée 703 pour la réception de données de mesures, et une interface de sortie 706 pour la fourniture d'un modèle modifié. Enfin, l'ordinateur peut comporter, pour permettre une interaction aisée avec un utilisateur, un écran 701 et un clavier 702. Bien entendu, le clavier est facultatif, notamment dans le cadre d'un ordinateur ayant la forme d'une tablette tactile, par exemple.

Par ailleurs, le schéma fonctionnel présenté sur la figure 6 est un exemple typique d'un programme dont certaines instructions peuvent être réalisées auprès de dispositif décrit ci-avant. A ce titre, la figure 6 peut correspondre à l'organigramme de l'algorithme général d'un programme informatique au sens de l'invention.

Bien entendu, la présente invention ne se limite pas aux formes de réalisation décrites ci-avant à titre d'exemples ; elle s'étend à d'autres variantes.

D'autres réalisations sont possibles.

Par exemple, certains modes de réalisation présentés ci-dessus sont appliqués à des modèles deux dimensions mais peuvent également s'appliquer sans difficulté à des modèles en trois dimensions.

**Revendications**

1. Procédé mis en œuvre par ordinateur d'adaptation d'un modèle maillé d'un sous-sol géologique obtenu à l'aide de mesures dudit sous-sol géologique pour une mise en correspondance avec une cible, le modèle maillé adapté étant utilisé dans la détermination des réserves en gaz ou en hydrocarbures contenus dans un réservoir, ledit modèle comprenant une pluralité d'interfaces de référence comprenant un ordre, chaque interface de référence étant associée à une interface cible dans ladite cible,
dans lequel le procédé comporte :

   - pour au moins un couple d'interfaces successives dans l'ordre de la pluralité d'interfaces formé par une première interface de référence et une deuxième interface de référence, le modèle comprenant entre ladite première interface et ladite deuxième interface une pluralité d'alignement de coins de mailles, ces alignements formant des arêtes de mailles, chaque coin ayant des coordonnées initiales dans le modèle et pour chaque alignement courant parmi ladite pluralité de coins de mailles :

      - détermination d'une première intersection entre l'alignement courant et ladite première interface de référence ;
      - détermination d'une deuxième intersection entre l'alignement courant et ladite deuxième interface de référence ;
      - détermination d'une troisième intersection entre l'alignement courant et l'interface cible associée à ladite première interface de référence ;
      - détermination d'une quatrième intersection entre l'alignement courant et l'interface cible associée à ladite deuxième interface de référence ;
      - modification des coordonnées pour chaque coin courant de l'alignement en fonction des coordonnées initiales dudit coin courant, de la première intersection, de la deuxième intersection, de la troisième intersection et de la quatrième intersection, les coordonnées modifiés dudit coin courant étant sur l'alignement courant;

   - pour le au moins un couple d'interfaces successives, les coins desdits alignements compris entre ladite première interface et ladite deuxième interface ayant un numéro d'ordre dans chaque alignement :

      - pour chaque numéro d'ordre courant, identification d'une interface intermédiaire formée de côtés de mailles, lesdits côtés ayant comme coins des coins dudit numéro d'ordre courant;

   - pour chaque interface intermédiaire et pour chaque coin courant de ladite interface courante, seconde modification des coordonnées dudit coin courant en fonction des coordonnées courantes dudit coin courant et en fonction des coordonnées courantes des coins distants de moins d'une valeur de fenêtre du coin courant.

2. Procédé selon la revendication 1, dans lequel, un système courant de coordonnée étant défini le long de l'alignement courant, la première intersection ayant une coordonnée $c_1$ dans le système courant de coordonnée, la deuxième intersection ayant une coordonnée $c_2$ dans le système courant de coordonnée, la troisième intersection ayant une coordonnée $c_3$ dans le système courant de coordonnée, la quatrième intersection ayant une coordonnée $c_4$ dans le système courant de coordonnée, ledit coin courant ayant une coordonnée initiale $c_c$ dans le système courant de coordonnée, la coordonnée modifiée dudit coin courant dans le système courant de coordonnée est fonction de

$$c_n = c_C + (c_2 - c_4) + (c_1 - c_3 - c_2 + c_4)\frac{c_c - c_2}{c_1 - c_2}$$

3. Procédé selon la revendication 1, dans lequel, les coordonnées des coins étant exprimé selon une pluralité de composantes, la seconde modification des coordonnées dudit coin comprend le calcul d'un filtre médian ou d'une moyenne sur les coordonnées dudit coin courant selon au moins une composante et sur les coordonnées desdits coins distants selon la au moins une composante.

4. Procédé selon l'une des revendications 1 et 3, dans lequel, ledit coin courant étant compris dans un alignement, la seconde modification des coordonnées dudit coin courant maintient ledit coin dans ledit alignement.

5. Procédé selon l'une des revendications 1 à 4, dans lequel la valeur de fenêtre est fonction d'une distance dudit coin courant à une faille dans ledit modèle.

6. Procédé selon l'une des revendications 1 à 5, dans lequel la valeur de fenêtre est fonction d'une direction anisotropique dans ledit modèle.

7. Procédé selon la revendication 6, dans lequel la direction anisotropique est parallèle à une ligne passant par ledit coin courant et perpendiculaire à une faille dans ledit modèle.

8. Procédé selon l'une des revendications précédentes, dans lequel, les coordonnées des coins étant exprimé selon une pluralité de composantes, la distance selon au moins une composante de coordonnées entre un coin courant et un coin courant modifié est inférieure à une valeur de seuil.

9. Procédé selon l'une des revendications précédentes, dans lequel, la méthode comporte en outre, le modèle comportant au moins une faille :

   - identification d'au moins un coin ayant une distance à la au moins une faille inférieure à une distance d'influence prédéterminée ;
   - modification des coordonnées du coin ayant une distance à la au moins une faille inférieure à la distance d'influence prédéterminée en fonction de modifications déterminées pour une pluralité de points ayant une distance à la au moins une faille supérieure à la distance d'influence prédéterminée et appartenant à une interface commune avec le coin ayant une distance à la au moins une faille inférieure à la distance d'influence prédéterminée.

10. Procédé selon la revendication 9, dans lequel la modification des coordonnées du coin ayant une distance à la au moins une faille inférieure à la distance d'influence prédéterminée comporte un calcul d'une moyenne pondérée.

11. Procédé selon la revendication 9, dans lequel la modification des coordonnées du coin ayant une distance à la au moins une faille inférieure à la distance d'influence prédéterminée comporte une régression.

12. Dispositif d'adaptation d'un modèle maillé obtenu à l'aide de mesures d'un sous-sol géologique pour une mise en correspondance avec une cible, le modèle maillé adapté étant utilisé dans la détermination des réserves en gaz ou en hydrocarbures contenus dans un réservoir, ledit modèle comprenant une pluralité d'interfaces de référence, la pluralité d'interfaces de référence comprenant un ordre et chaque interface de référence étant associée à une interface cible dans ladite cible,
dans lequel le dispositif comporte :

   - une interface d'entrée pour la réception du modèle maillé ;
   - un circuit adapté pour réaliser les actions suivantes pour au moins un couple d'interfaces successives dans l'ordre de la pluralité d'interfaces formé par une première interface de référence et une deuxième interface de référence, le modèle comprenant entre ladite première interface et ladite deuxième interface une pluralité d'alignement de coins de mailles, ces alignements formant des arêtes de mailles, chaque coin ayant des coordonnées initiales dans le modèle et pour chaque alignement courant parmi ladite pluralité de coins de mailles :

      - détermination d'une première intersection entre l'alignement courant et ladite première interface de référence ;
      - détermination d'une deuxième intersection entre l'alignement courant et ladite deuxième interface de référence ;
      - détermination d'une troisième intersection entre l'alignement courant et l'interface cible associée à ladite première interface de référence ;
      - détermination d'une quatrième intersection entre l'alignement courant et l'interface cible associée à ladite deuxième interface de référence ;
      - modification des coordonnées pour chaque coin courant de l'alignement en fonction des coordonnées initiales dudit coin courant, de la première intersection, de la deuxième intersection, de la troisième intersection et de la quatrième intersection, les coordonnées modifiés dudit coin courant étant sur l'alignement courant;

   - pour le au moins un couple d'interfaces successives, les coins desdits alignements compris entre ladite première interface et ladite deuxième interface ayant un numéro d'ordre dans chaque alignement :
- pour chaque numéro d'ordre courant, identification d'une interface intermédiaire formée de côtés de mailles, lesdits côtés ayant comme coins des coins dudit numéro d'ordre courant;
- pour chaque interface intermédiaire et pour chaque coin courant de ladite interface courante, seconde modification des coordonnées dudit coin courant en fonction des coordonnées courantes dudit coin courant et en fonction des coordonnées courantes des coins distants de moins d'une valeur de fenêtre du coin courant.
- une interface de sortie pour la fourniture du modèle maillé modifié.

13. Produit programme informatique comportant des instructions pour la mise en œuvre du procédé selon l'une des revendications 1 à 11, lorsque ce programme est exécuté par un processeur.

**Patentansprüche**

1. Computerimplementiertes Verfahren zum Anpassen eines Gittermodells eines geologischen Untergrundes, welches unter Verwendung von Messungen des geologischen Untergrundes erhalten wurde, zur Anpassung an ein Ziel, wobei das angepasste Gittermodell zum Bestimmen der in einem Speicher enthaltenen Gas- oder Kohlenwasserstoffreserven verwendet wird,
wobei das Modell eine Vielzahl von Referenzgrenzflächen umfasst, die eine Reihenfolge aufweisen, wobei jede Referenzgrenzfläche einer Zielgrenzfläche in dem Ziel zugeordnet ist, wobei das Verfahren umfasst:

- für wenigstens ein Paar aufeinanderfolgender Grenzflächen in der Reihenfolge der Vielzahl von Grenzflächen, das durch eine erste Referenzgrenzfläche und eine zweite Referenzgrenzfläche gebildet wird, wobei das Modell zwischen der ersten Grenzfläche und der zweiten Grenzfläche eine Vielzahl von GittereckenFluchtlinien umfasst, wobei diese Fluchtlinien Gitterkanten bilden, wobei jede Ecke Anfangskoordinaten im Modell aufweist und für jede aktuelle Fluchtlinie aus der Vielzahl von Gitterecken:

- Bestimmen eines ersten Schnittpunktes zwischen der aktuellen Fluchtlinie und der ersten Referenzgrenzfläche;
- Bestimmen eines zweiten Schnittpunktes zwischen der aktuellen Fluchtlinie und der zweiten Referenzgrenzfläche;
- Bestimmen eines dritten Schnittpunktes zwischen der aktuellen Fluchtlinie und der der ersten Referenzgrenzfläche zugeordneten Zielgrenzfläche;
- Bestimmen eines vierten Schnittpunktes zwischen der aktuellen Fluchtlinie und der der zweiten Referenzgrenzfläche zugeordneten Zielgrenzfläche;
- Modifikation der Koordinaten für jede aktuelle Ecke der Fluchtlinie gemäß den Anfangskoordinaten der aktuellen Ecke, des ersten Schnittpunkts, des zweiten Schnittpunkts, des dritten Schnittpunkts und des vierten Schnittpunkts, wobei die modifizierten Koordinaten der aktuellen Ecke auf der aktuellen Fluchtlinie liegen;

- für das wenigstens eine Paar aufeinanderfolgender Grenzflächen, wobei die Ecken der Fluchtlinien zwischen der ersten Grenzfläche und der zweiten Grenzfläche eine Ordnungsnummer in jeder Fluchtlinie aufweisen:
- für jede aktuelle Ordnungsnummer die Identifizierung einer Zwischengrenzfläche, die aus Gitterseiten gebildet ist, wobei die Seiten als Ecken die Ecken der aktuellen Ordnungsnummer aufweisen;
- für jede Zwischengrenzfläche und für jede aktuelle Ecke der aktuellen Grenzfläche, eine zweite Modifikation der Koordinaten der aktuellen Ecke gemäß den aktuellen Koordinaten der aktuellen Ecke und gemäß den aktuellen Koordinaten der Ecken, die weniger als einen Fensterwert von der aktuellen Ecke entfernt sind.

2. Verfahren nach Anspruch 1, wobei ein aktuelles Koordinatensystem entlang der aktuellen Fluchtlinie definiert ist, wobei der erste Schnittpunkt im aktuellen Koordinatensystem eine Koordinate $c_1$ aufweist, der zweite Schnittpunkt im aktuellen Koordinatensystem eine Koordinate $c_2$ aufweist, der dritte Schnittpunkt im aktuellen Koordinatensystem eine Koordinate $c_3$ aufweist, der vierte Schnittpunkt im aktuellen Koordinatensystem eine Koordinate $c_4$ aufweist, wobei die aktuelle Ecke eine Anfangskoordinate $c_C$ im aktuellen Koordinatensystem aufweist, wobei die modifizierte Koordinate der aktuellen Ecke im aktuellen Koordinatensystem eine Funktion ist von :

$$c_n = c_C + (c_2 - c_4) + (c_1 - c_3 - c_2 + c_4)\frac{c_c - c_2}{c_1 - c_2}$$

3. Verfahren nach Anspruch 1, wobei die Koordinaten der Ecken gemäß einer Vielzahl von Komponenten ausgedrückt werden, wobei die zweite Modifikation der Koordinaten der Ecke das Berechnen eines Medianfilters oder eines Mittelwertes über die Koordinaten der aktuellen Ecke gemäß wenigstens einer Komponente und über die Koordinaten der entfernten Ecken gemäß der wenigstens einen Komponente umfasst.

4. Verfahren nach einem der Ansprüche 1 und 3, wobei, wenn die aktuelle Ecke in einer Fluchtlinie enthalten ist, die zweite Modifikation der Koordinaten der aktuellen Ecke die Ecke in der Fluchtlinie beibehält.

5. Verfahren nach einem der Ansprüche 1 bis 4, wobei der Fensterwert eine Funktion einer Entfernung der aktuellen Ecke zu einer Verwerfung in dem Modell ist.

6. Verfahren nach einem der Ansprüche 1 bis 5, wobei der Fensterwert eine Funktion einer anisotropen Richtung in dem Modell ist.

7. Verfahren nach Anspruch 6, wobei die anisotrope Richtung parallel zu einer Linie ist, die durch die aktuelle Ecke verläuft, und senkrecht zu einer Verwerfung in dem Modell verläuft.

8. Verfahren nach einem der vorhergehenden Ansprüche, wobei die Koordinaten der Ecken gemäß einer Vielzahl von Komponenten ausgedrückt werden, wobei der Abstand gemäß wenigstens einer Koordinaten-Komponente zwischen einer aktuellen Ecke und einer modifizierten aktuellen Ecke kleiner als ein Schwellenwert ist.

9. Verfahren nach einem der vorhergehenden Ansprüche, wobei das Modell wenigstens eine Verwerfung umfasst, wobei das Verfahren ferner umfasst:

- Identifizieren wenigstens einer Ecke mit einem Abstand zu der wenigstens einen Verwerfung, der kleiner als ein vorbestimmter Einflussabstand ist;
- Modifikation der Koordinaten der Ecke mit einem Abstand zu der wenigstens einen Verwerfung, der kleiner als der vorbestimmte Einflussabstand ist, gemäß Modifikationen, die für eine Vielzahl von Punkten bestimmt wurden, die einen Abstand zu der wenigstens einen Verwerfung aufweisen, der größer als der vorbestimmte Einflussabstand ist, und die zu einer gemeinsamen Grenzfläche mit der Ecke gehören, die einen Abstand zu der wenigstens einen Verwerfung aufweist, der kleiner als der vorbestimmte Einflussabstand ist.

10. Verfahren nach Anspruch 9, wobei die Modifikation der Koordinaten der Ecke mit einem Abstand zu der wenigstens einen Verwerfung, der kleiner als der vorbestimmte Einflussabstand ist, das Berechnen eines gewichteten Mittelwerts umfasst.

11. Verfahren nach Anspruch 9, wobei die Modifikation der Koordinaten der Ecke mit einem Abstand zu der wenigstens einen Verwerfung, der kleiner als der vorbestimmte Einflussabstand ist, eine Regression beinhaltet.

12. Vorrichtung zum Anpassen eines Gittermodells, welches unter Verwendung von Messungen eines geologischen Untergrundes erhalten wurde, zur Anpassung an ein Ziel, wobei das angepasste Gittermodell zum Bestimmen der in einem Speicher enthaltenen Gas- oder Kohlenwasserstoffreserven verwendet wird, wobei das Modell eine Vielzahl von Referenzgrenzflächen umfasst, die eine Reihenfolge aufweisen, wobei jede Referenzgrenzfläche einer Zielgrenzfläche in dem Ziel zugeordnet ist, wobei die Vorrichtung umfasst:

- eine Eingabeschnittstelle zum Empfangen des Gittermodells;
- eine Schaltung, die dazu geeignet ist, die folgenden Aktionen für wenigstens ein Paar aufeinanderfolgender Grenzflächen in der Reihenfolge der Vielzahl von Grenzflächen durchzuführen, das durch eine erste Referenzgrenzfläche und eine zweite Referenzgrenzfläche gebildet wird, wobei das Modell zwischen der ersten Grenzfläche und der zweiten Grenzfläche eine Vielzahl von Gittereckenfluchtlinien umfasst, wobei diese Fluchtlinien Gitterkanten bilden, wobei jede Ecke Anfangskoordinaten im Modell aufweist, und für jede aktuelle Fluchtlinie aus der Vielzahl von Gitterecken:

- Bestimmen eines ersten Schnittpunktes zwischen der aktuellen Fluchtlinie und der ersten Referenzgrenzfläche;
- Bestimmen eines zweiten Schnittpunktes zwischen der aktuellen Fluchtlinie und der zweiten Referenzgrenzfläche;
- Bestimmen eines dritten Schnittpunktes zwischen der aktuellen Fluchtlinie und der der ersten Referenzgrenzfläche zugeordneten Zielgrenzfläche;

- Bestimmen eines vierten Schnittpunktes zwischen der aktuellen Fluchtlinie und der der zweiten Referenzgrenzfläche zugeordneten Zielgrenzfläche;

- Modifikation der Koordinaten für jede aktuelle Ecke der Fluchtlinie gemäß den Anfangskoordinaten der aktuellen Ecke, des ersten Schnittpunkts, des zweiten Schnittpunkts, des dritten Schnittpunkts und des vierten Schnittpunkts, wobei die modifizierten Koordinaten der aktuellen Ecke auf der aktuellen Fluchtlinie liegen;

- für das wenigstens eine Paar aufeinanderfolgender Grenzflächen, wobei die Ecken der Fluchtlinien zwischen der ersten Grenzfläche und der zweiten Grenzfläche eine Ordnungsnummer in jeder Fluchtlinie aufweisen:

- für jede aktuelle Ordnungsnummer die Identifizierung einer Zwischengrenzfläche, die aus Gitterseiten gebildet ist, wobei die Seiten als Ecken die Ecken der aktuellen Ordnungsnummer aufweisen;

- für jede Zwischengrenzfläche und für jede aktuelle Ecke der aktuellen Grenzfläche, eine zweite Modifikation der Koordinaten der aktuellen Ecke gemäß den aktuellen Koordinaten der aktuellen Ecke und gemäß den aktuellen Koordinaten der Ecken, die weniger als einen Fensterwert von der aktuellen Ecke entfernt sind;

- eine Ausgabeschnittstelle zur Bereitstellung des modifizierten Gittermodells.

**13.** Computerprogrammprodukt, das Anweisungen zur Durchführung des Verfahrens nach einem der Ansprüche 1 bis 11 umfasst, wenn dieses Programm von einem Prozessor ausgeführt wird.

**Claims**

**1.** Method implemented by computer for adaptation of a lattice model of a geological subsurface obtained using measurements of said geological subsurface for comparison to a target, the adapted lattice model being used in the determination of the reserves of gas or of hydrocarbons contained in a reservoir,
said model comprising a plurality of reference interfaces comprising an order, each reference interface being associated with a target interface in said target,
wherein the method comprises:

- for at least one couple of successive interfaces in the order of the plurality of interfaces formed by a first reference interface and a second reference interface, the model comprising between said first interface and said second interface a plurality of alignment of cell corners, these alignments forming edges of cells, each corner having initial coordinates in the model and for each current alignment among said plurality of cell corners:

-- determination of a first intersection between the current alignment and said first reference interface;
-- determination of a second intersection between the current alignment and said second reference interface;
-- determination of a third intersection between the current alignment and the target interface associated with said first reference interface;
-- determination of a fourth intersection between the current alignment and the target interface associated with said second reference interface;
-- modification of the coordinates for each current corner of the alignment as a function of the initial coordinates of said current corner, of the first intersection, of the second intersection, of the third intersection and of the fourth intersection, the modified coordinates of said current corner being on the current alignment;

- for the at least one pair of successive interfaces, the corners of said alignments comprised between said first interface and said second interface having a serial number in each alignment:
- for each current serial number, identification of an intermediate interface formed by cell sides, said sides having, as corners, corners of said current serial number;
- for each intermediate interface and for each current corner of said current interface, second modification of the coordinates of said current corner according to the current coordinates of said current corner and according to the current coordinates of the corners distant by less than one window value from the current corner.

**2.** Method according to claim 1, wherein a current coordinate system being defined along the current alignment, the first intersection having a coordinate $c_1$ in the current coordinate system, the second intersection having a coordinate $c_2$ in the current coordinate system, the third intersection having a coordinate $c_3$ in the current coordinate system, the fourth intersection having a coordinate $c_4$ in the current coordinate system, said current corner having an initial coordinate $c_c$ in the current coordinate system,

the modified coordinate of said current corner in the current coordinate system is a function of

$$c_n = c_C + (c_2 - c_4) + (c_1 - c_3 - c_2 + c_4)\frac{c_c - c_2}{c_1 - c_2}$$

3.  Method according to claim 1, wherein the coordinates of the corners being expressed according to a plurality of components, the second modification of the coordinates of said corner comprises the calculation of a median filter or of an average over the coordinates of said current corner according to at least one component and over the coordinates of said distant corners according to the at least one component.

4.  Method according to one of claims 1 and 3, wherein said current corner being comprised in an alignment, the second modification of the coordinates of said current corner maintain said corner in said alignment.

5.  Method according to one of claims 1 to 4, wherein the window value is a function of a distance from said current corner to a fault in said model.

6.  Method according to one of claims 1 to 5, wherein the window value is a function of an anisotropic direction in said model.

7.  Method according to claim 6, wherein the anisotropic direction is parallel to a line passing through said current corner and perpendicular to a fault in said model.

8.  Method according to one of the previous claims, wherein the coordinates of the corners being expressed according to a plurality of components, the distance according to at least one component of coordinates between a current corner and a modified current corner is less than a threshold value.

9.  Method according to one of the previous claims, wherein the method further comprises, the model comprising at least one fault:

    - identification of at least one corner having a distance to the at least one fault smaller than a predetermined influence distance;
    - modification of the coordinates of the corner having a distance to the at least one fault smaller than the predetermined influence distance according to modifications determined for a plurality of points having a distance to the at least one fault greater than the predetermined influence distance and belonging to an interface shared with the corner having a distance to the at least one fault smaller than the predetermined influence distance.

10. Method according to claim 9, wherein the modification of the coordinates of the corner having a distance to the at least one fault smaller than the predetermined influence distance comprises a calculation of a weighted average.

11. Method according to claim 9, wherein the modification of the coordinates of the corner having a distance to the at least one fault smaller than the predetermined influence distance comprises a regression.

12. Device for adaptation of a lattice model obtained using measurements of a geological subsurface for comparison to a target, the adapted lattice model being used in the determination of the reserves of gas or of hydrocarbons contained in a reservoir, said model comprising a plurality of reference interfaces, the plurality of reference interfaces comprising an order and each reference interface being associated with a target interface in said target, wherein the device comprises:

    - an input interface for the reception of the lattice model;
    - circuit adapted for carrying out the following actions for at least one pair of successive interfaces in the order of the plurality of interfaces formed by a first reference interface and a second reference interface, the model comprising between said first interface and said second interface a plurality of alignment of cell corners, these alignments forming edges of cells, each corner having initial coordinates in the model and for each current alignment among said plurality of cell corners:

        -- determination of a first intersection between the current alignment and said first reference interface;
        -- determination of a second intersection between the current alignment and said second reference interface;

-- determination of a third intersection between the current alignment and the target interface associated with said first reference interface;
-- determination of a fourth intersection between the current alignment and the target interface associated with said second reference interface;
-- modification of the coordinates for each current corner of the alignment as a function of the initial coordinates of said current corner, of the first intersection, of the second intersection, of the third intersection and of the fourth intersection, the modified coordinates of said current corner being on the current alignment;

- for the at least one pair of successive interfaces, the corners of said alignments comprised between said first interface and said second interface having a serial number in each alignment:
- for each current serial number, identification of an intermediate interface formed by cell sides, said sides having, as corners, corners of said current serial number;
- for each intermediate interface and for each current corner of said current interface, second modification of the coordinates of said current corner according to the current coordinates of said current corner and according to the current coordinates of the corners distant by less than one window value from the current corner.
-- an output interface for providing the modified lattice model.

13. Computer program product comprising instructions for implementing the method according to one of claims 1 to 11, when this program is executed by a processor.

FIG. 1

**FIG. 2a**

FIG. 2b

FIG. 3

**FIG. 4**

FIG. 5a

FIG. 5b

MOD — 600

? — 601

NO_REST → MOD_DEF — 607

REST

DET_INT — 602

DET_DEPL — 603

THR_DEPL — 604

? — 605

PT_NO_MOD

PT_MOD

DESPIK — 606

## FIG. 6

FIG. 7

**EP 3 028 263 B1**

## RÉFÉRENCES CITÉES DANS LA DESCRIPTION

**Documents brevets cités dans la description**

- EP 0254325 A